# EUROPEAN PATENT APPLICATION

(11) **EP 1 367 516 A1**
(43) Date of publication of application: **03.12.2003**
(21) Application number: 02388038.8
(22) Date of filing: 29.05.2002
(51) Int. Cl.: G06F 17/60, G07F 7/00, G07F 19/00

(54) **System, method and means for electronic transactions**

(71) Applicant: SubClearing AS, 1366 Lysaker (NO)
(72) Inventor: Groenseth, Lars Aage, 0281 Oslo (NO); Rana, Shahzad Asghar, 0277 Oslo (NO)
(74) Representative: Sigh, Erik

(57) **Abstract**

The invention provides a method, system a computer program product for electronic commerce and payments transmission. A purchaser terminal (2), a vendor terminal or server (4), a clearing centre (5), a telecommunications operator (8) and a telecommunications operator associated text message transmitter (6) are connected by means of a telecommunications network (3). The clearing centre (5) comprises a password issuing function (9) and a verification function (11). The password issuing function sends in response to receipt of the telephone number of the purchaser's mobile telephone (7), transmitted from the purchaser terminal via the vendor terminal, a unique, time-limited password via a text message transmitter. The purchaser enters the password via the purchaser terminal into a verification function (11) in the clearing centre. Via the text message transmitter (6), the verification function sends a receipt message having a message rate that corresponds to the price of the service purchased. The verification function also sends a message to the telecommunications operator comprising information about the receipt text message, and a demand for the sum related to the service purchased and the appropriate message rate.

## Description

The present invention relates to a transaction system, method and software product intended for electronic commerce.

One of the characteristics of solutions for electronic commerce over digital media based on Transmission Control Protocol/Internet Protocol (TCP/IP), as for instance the World Wide Web on the Internet, is that the individual users of such solutions are unidentified. This creates a challenge as regards the transmission of payments in such solutions, because when transactions are made, it is necessary to have the payer verified in order to effect debiting and/or crediting. With the known solutions, this area in particular calls for relatively demanding and complex interactions between customer and commercial solution, and similarly complex transactions between supplier and payments transmission service in the commercial solution, and might be regarded as rather unsuitable when there is a need to conduct small-sum transactions in digital media.

The known techniques in this field can basically be divided into three groups:
- Established conventional means of payment
- Credit cards
- Charge cards and similar.

The aforementioned techniques are based primarily on debiting on the same lines as debiting in "the physical world", where products and services are purchased over the counter. Established account arrangements with the customers and a well developed distribution network are used, and also have the effect of reducing the risk of misuse because of the following parameters:
- The customer reports any loss of a credit card immediately to the card company in order to have the card blocked;
- use of cards is approved only for use in connection with the purchase of physical goods that are to be delivered to the same address as the invoice address for the card; and
- the use of the card involves the entry of a number of parameters known only to the cardholder.
- There is also a minimum sum for the execution of transactions which is charged to the sales outlet and in some cases the purchaser.

The solution is satisfactory in connection with the purchase of goods for large sums and in connection with physical deliveries. However, it is very inefficient when there is a need to enter small sums, and also very expensive as charges will often be higher than the sum for which purchases have been made.

Subscription systems for electronic commerce and payment are also known. Such systems are based on an established customer relationship between vendor and purchaser of information and services, where the purchaser pays a fixed sum in order to gain access to the delivery, and may also, if necessary, be charged for extra use and/or special services. The customer is invoiced regularly for a fixed fee, and, when appropriate, with an extra charge for special use. The solution does little to encourage impulse buys and one-off purchases as the establishment of customer relationships has been found to take time, and the cost of establishing the customer relationship is high, and its implementation has also been found to be costly because of the commonly used physical invoicing. Thus, the solution is used mostly in professional markets in connection with the purchase of large quantities of goods and/or services.

Microtransaction solutions do exist, as for example those known under the names Digicash, Epay and SET. The established solutions in this field can be said to be characterised by two factors:
- they require the establishment of a customer account arrangement with an independent third party, often involving an advance payment and/or the payment of a deposit; and
- they require the installation of software in a PC before the user can avail himself of the account payment option.

The various solutions that have been available on the market have been found to be rather awkward and demanding to use, and to be a large obstacle to their own utilisation. It appears to the inventors that the existing solutions have had limited success.

Thus, there is a need for a solution which in an efficient, economical, user-friendly and reliable manner is capable of facilitating a better solution for electronic commerce and payment.

The primary object of the present invention is to meet the aforementioned need.

The object is attained in that the present invention provides a system for electronic payments transmission in connection with electronic commerce which comprises a system characterised by the features set forth in attached patent claim 1.

The object is also attained in that the present invention provides a method for electronic payments transmission in connection with electronic commerce which comprises a system characterised by the features set forth in attached patent claim 2.

The object is also attained in that the present invention provides a software product for electronic payments transmission in connection with electronic commerce which comprises a system characterised by the features set forth in attached patent claim 3.

In accordance with the present invention, use is made of the mobile telephone and its text message protocols, in combination with digital media, as a personal possession, and an established account arrangement in order to be able to effect verification, debiting and/or crediting in connection with the purchase of goods and services, preferably information services via digital media.

The present invention provides a solution where a user does not need any previous customer relationship in order to carry out a transaction involving the purchase of a service or product. The user is identified through the use or the purchase of the payable services, which is an essential difference from the existing methods of settlement.

In one aspect of the invention, the user, i.e., the purchaser, is sent a single-use password from a Password Server (SPS) in a clearing centre, which password is unique and has a limited lifetime. This limited lifetime is preferably dynamically adjustable depending on the type of service or product that is to be paid for. The life span of the password and who has which password will be controlled by the SPS.

In another aspect of the invention, a solution according to the invention will also provide the required documentation for the transaction. The user receives his unique single-use password on his mobile unit, and this password is used in the media employed for the purchase. When the user makes use of the password, it is verified against details in a verification server in the solution. This server checks that the password is valid, and that it is being used by the correct subscriber and user location, and then sends a message indicating successful verification to the supplier, who in turn will allow the user access to the product or service the purchaser wishes to use. When the password is used, a verification message is sent to the user and the user location, thereby ensuring that both the user and the user location have documentation of their use, and traffic on their web site.

In the following the invention will be explained in more detail with the aid of an example, and with reference to the attached drawing wherein:

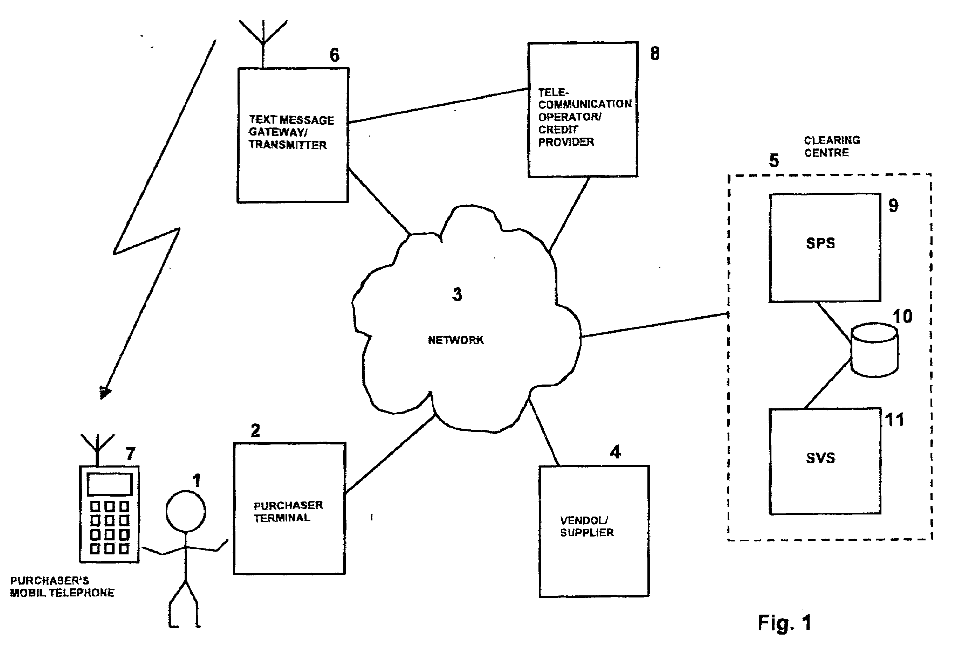

Fig. 1 shows a block diagram of an exemplary embodiment of a systems solution according to the invention.

In the following example it is envisaged that a user (or purchaser) 1 is at a terminal 2 connected to a network 3. The terminal in the example is suitable for receiving and displaying information products offered and sold by a server 4, also connected to the network 3. Although in this example it is indicated that the purchaser's terminal is suitable for the delivery of information services, the terminal could just as easily be a vending machine or another point of sale (POS), as for instance a vending machine for soft drinks, or a checkout in a grocery shop. The purchaser makes known his identity by, for example, entering his unique mobile telephone number in the available terminal at a time when he is given the opportunity to buy the product or service on offer, and initiates the transmission of the mobile telephone number to the vendor's network-connected server 4.

The vendor of information receives the purchaser's mobile telephone number as identification of his customer, and relays this number to a clearing centre 5, together with the total sum for the transaction, and asks the clearing centre to carry out verification and to handle the payment of the sum.

The clearing centre checks the mobile telephone number with a telecommunications operator 8 in order to have the mobile telephone number verified as a valid and operative number, and that the customer has a good credit standing with the telecommunications operator.

On positive verification of the mobile telephone number by the telecommunications operator, which means to say that the telecommunications operator acknowledges that the mobile telephone number is valid and operative, the telecommunications operator sends a verification message to the clearing centre.

On positive verification from the telecommunications operator, a password server function (SPS) 9 in the clearing centre issues a unique password that is valid for single use and which has a limited lifetime. The clearing centre preferably includes a database 10 that stores the data which are of relevance to the transaction. The database 10 is preferably available for the functions covered by the clearing centre and which are operative in connection with the transactions made through a solution according to the invention.

The clearing centre sends the password to the purchaser by means of a preferably ordinary text message, via a text message GW (gateway) and transmitter 6, alternatively through a mobile telephone that is connected to the clearing centre.

The purchaser receives the password on his mobile telephone 7, preferably with a message instructing him to enter the password in an entry field displayed on the terminal 2, which could perhaps be next to a field where the purchaser has previously entered his mobile telephone number. After the password has been entered, its transmission to the vendor's server, or a sales terminal, represented by 4 in Fig, 1, is initiated.

The vendor 4 receives the password from the purchaser terminal 2, and sends it to a verification server function (SVS) 11 in the clearing centre 5, preferably together with the already received mobile number, to have verified that the password is valid.

The clearing centre (SVS) receives the password and checks that it is the same password as that previously sent by the centre to the purchaser. A check is also made to see if the vendor is bona fide and that it is a serious enquiry. If the verification check gives a positive result, the centre sends positive verification to the vendor 4. However, if the result of the check is negative, the centre sends negative verification to the vendor.

The vendor receives the verification from the clearing centre (SVS), and will typically allow the purchaser access to the information and or/service ordered if the verification is positive.

The clearing centre (SVS) then sends a receipt for the purchase made to the purchaser's mobile telephone 7 via a text message having a special rate class, the rate class for the receipt text message being in accordance with the price of the product or service the user 1 has ordered via the terminal 2, and has had delivered by the vendor 4.

When the receipt text message has been transmitted to the purchaser's mobile telephone 1, the clearing centre 5 sends a message to the respective telecommunications operator 8 handling the mobile telephone number in question, with information about the rate class used for the text message containing the receipt, and notifies the telecommunications operator of a demand for this sum.

The telecommunications operator receives the demand and verifies it against his "counts" which are registered to the subscriber in question, and on positive verification the telephone operator will make available a corresponding, optionally agreed, payment to the clearing centre, or its operator. This will preferably take place through an electronic funds transfer from a telecommunications operator account to a clearing centre account.

The clearing centre receives the registered sum and forwards payment thereof, for example, with a deduction for handling the transaction, to the vendor 4 who originally requested the clearing centre to handle the transaction as described above.

## Claims

1. A transaction system for electronic commerce and payments transmission, which transaction system includes a purchaser terminal (2), a vendor terminal or vendor server (4), a clearing centre (5), a mobile telecommunications operator associated telecommunications operator server (8) and a mobile telecommunications operator associated text message transmitter (6), interconnected by means of at least one telecommunications network (3), and a purchaser-associated mobile telephone (7) for receiving a text message, by which transaction system a purchaser (1), via the purchaser terminal (2) on transmission of the telephone number of the mobile telephone to the vendor terminal or vendor server (4), can order a service, which service is offered or delivered by a vendor from the vendor terminal or server (4), and can pay for a service purchase through his credit with the mobile telecommunications operator,
wherein the clearing centre comprises a password issuing means (9), which password issuing means is arranged to register the order and the telephone number of the mobile telephone transmitted via the transaction system from the purchaser terminal to the clearing centre, and to generate and send to the mobile telephone, via the text message transmitter, a unique, time-limited password in response to the registration of the order and the telephone number of the mobile telephone, which password is intended for transmission from the purchaser terminal to the clearing centre as the purchaser's confirmation of the purchase, and a checking means for checking that a password received from the purchaser is valid,
**characterised in**
**that** the clearing centre also includes a verification means (11), which verification means is arranged to:
- send to the mobile telephone, via the text message transmitter (6), a receipt text message in response to the clearing centre's receipt of a valid password, which text message has a message rate which corresponds to a price for the service purchased; and
- to send a message to the telecommunications operator comprising information about the receipt text message.

2. A method in a transaction system for electronic commerce and payments transmission, which transaction system includes a purchaser terminal (2), a vendor terminal or vendor server (4), a clearing centre (5), a mobile telecommunications operator associated telecommunications operator server (8) and a mobile telecommunications operator associated text message transmitter (6), interconnected by means of at least one telecommunications network (3), and a purchaser-associated mobile telephone (7) for receiving text messages, by which transaction system a purchaser (1), via the purchaser terminal (2) can transmit to the vendor terminal or vendor server (4) the telephone number of the mobile telephone with an order for a service, which service is offered or delivered by a vendor from the vendor terminal or server (4), and can pay for a service purchase through his credit with the mobile telecommunications operator, which method includes:
registering in the clearing centre the order and the telephone number of the mobile telephone transmitted via the transaction system from the purchaser terminal to the clearing centre;
generating and sending from a password issuing means (9) in the clearing centre, via the text message transmitter, to the mobile telephone, a unique, time-limited password in response to the registration of the order and the telephone number of the mobile telephone, which password is intended for transmission from the purchaser terminal to the clearing centre as the purchaser's confirmation of the purchase;
checking in the clearing centre that the password received from the purchaser is valid,
and **characterised by**
sending from a verification means (11) in the clearing centre to the mobile telephone, via the text message transmitter (6), a receipt text message in response to the clearing centre's receipt of a valid password, which text message has a message rate that corresponds to a price for the service purchased; and
sending a message to the telecommunications operator comprising information about
the receipt text message.

3. A computer program product comprising a computer-executable computer program code, which computer-executable computer program code, once entered and executed in a clearing centre computer in a transaction system for electronic commerce and payments transmission, effects the establishment and operation of a clearing centre, by which transaction system a purchaser ( 1 ), via a purchaser terminal (2) on transmission of a purchaser-associated mobile telephone number of a mobile telephone to the vendor terminal (4), can order a service, which service is offered or delivered by a vendor from a vendor terminal or vendor server (4), and can pay for a service purchase through his credit with a mobile telecommunications operator, which transaction system comprises the purchaser terminal (2), the vendor terminal or vendor server (4), a clearing centre (5), a mobile telecommunications operator associated telecommunications operator server (8) and a mobile telecommunications operator associated text message transmitter (6), interconnected by at least one telecommunications network (3), and the purchaser-associated mobile telephone (7) for receiving a text message,
which clearing centre includes a password issuing means (9), which password issuing means is arranged to register the order and the telephone number of the mobile telephone transmitted via the transaction system from the purchaser terminal to the clearing centre and to generate and send to the mobile telephone, via the text message transmitter, a unique, time-limited password in response to the registration of the order and the telephone number of the mobile telephone, which password is intended for transmission from the purchaser terminal to the clearing centre as the purchaser's confirmation of the purchase, and a checking means for checking that the password received from the purchaser is valid,
**characterised in**
**that** the clearing centre also includes a verification means (11), which verification means is arranged to:
- send to the mobile telephone via the text message transmission means (6), a receipt text message in response to the clearing centre's receipt of a valid password, which text message has a message rate that corresponds to a price for the service purchase; and
- to send a message to the telecommunications operator comprising information about the receipt text message.
